Europäisches Patentamt

European Patent Office

Office européen des brevets

(19)

(11) Veröffentlichungsnummer : **0 215 327**
**B1**

(12)

# EUROPÄISCHE PATENTSCHRIFT

(45) Veröffentlichungstag der Patentschrift :
26.04.89

(21) Anmeldenummer : 86111579.8

(22) Anmeldetag : 21.08.86

(51) Int. Cl.⁴ : **B 01 J   8/44// F23C11/02**

(54) Anströmboden mit Düsen für einen Fliessbett-Apparat.

(30) Priorität : 02.09.85 CH 3769/85

(43) Veröffentlichungstag der Anmeldung :
25.03.87 Patentblatt 87/13

(45) Bekanntmachung des Hinweises auf die Patenterteilung : 26.04.89 Patentblatt 89/17

(84) Benannte Vertragsstaaten :
**AT BE DE FR GB IT NL**

(56) Entgegenhaltungen :
**FR-A- 2 334 411**
**GB-A-   781 285**
**GB-A- 2 011 271**
**US-A- 2 914 388**
**US-A- 4 270 599**
**US-A- 4 589 841**

(73) Patentinhaber : **SULZER-ESCHER WYSS GMBH**
**Escher Wyss-Strasse 25 Postfach 1380**
**D-7980 Ravensburg (DE)**

(72) Erfinder : **Dentler, Arthur**
**Richard Strauss-Strasse 7**
**D-7981 Berg-Vorberg (DE)**

## Beschreibung

Die Erfindung betrifft einen Anströmboden mit Düsen für einen Fliessbett-Apparat, welche Düsen jeweils mit einem durch den Boden führenden Kanal zum Führen des Stromes eines Fluidisierungsmediums und mit einem oberhalb des Strömungskanals angeordneten Umlenkteil zur Umlenkung des Stromes beim Austritt aus dem Kanal gebildet sind, wobei das Umlenkteil mittels eines Leistenstücks gebildet wird.

Fliessbett-Apparate werden eingesetzt zur Behandlung von verschiedenen fluidisierbaren Materialien durch Fluidisieren mittels verschiedener Fluidisierungsmedien und unter verschiedenen Bedingungen, hauptsächlich, was die angewandten Behandlungstemperaturen und Behandlungszeit betrifft. Das Fliessbett des Apparats befindet sich oberhalb des Anströmbodens, der mit für das vorliegende Behandlungsverfahren und Material geeigneten Düsen bestückt ist.

Bei den heutigen Düsen ist der durch den Boden führende Kanal mit mindestens einem Steg versehen, welcher zum Halten eines oberhalb des Kanals angeordneten Umlenkteils, meistens mittels einer mittigen Schraubenverbindung in dem Strömungskanal vorgesehen ist. Diese Konstruktion hat hauptsächlich den Nachteil, daß diese Einbauten in dem Strömungsbereich des Kanals verschiedene Ablagerungen auf sich nehmen von Materialteilchen, die mit dem Fluidisierungsmedium mitgetragen werden. Diese Teilchenablagerungen führen zur Verengung des Durchtrittsprofils des Kanals, so dass Reinigungsarbeiten und andere Reparaturen notwendig sind, was selbstverständlich Produktionsausfälle mit sich bringt. Durch diese Verstopfungen verursachte Ausfälle der einzelnen Düsen beeinträchtigen selbstverständlich die Funktion des ganzen Apparates, da die Fluidisierung in dem Fliessbett nicht homogen wird.

Die Nachteile der bisherigen Konstruktionen des Anströmbodens sind noch markanter bei den Behandlungsfällen, wo mit besonders hohen Temperaturen gefahren werden muss und wo es sich noch dabei um ein Material handelt, das bei diesen hohen Temperaturen zum Ansetzen an den heissen Flächen, sowohl des Bodens wie der einzelnen Düsen neigt. Diese sogenannten Anbackungen werden mit der Zeit immer grösser, der Durchfluss des Fluidisierungsmediums immer mehr behindert, so dass wiederum und relativ sehr häufig die Apparatur eingestellt werden muss, um Reinigungs- und Reparaturarbeiten vornehmen zu können.

Es ist üblich, für solche mit hohen Temperaturen arbeitende Behandlungsarten verschiedene Massnahmen zum Kühlen der einzelnen Teile des Anströmbodens zu treffen. Dazu gehört ein sogenannter Doppelboden, der mittels zwei Wänden bzw. Platten gebildet ist, die zwischen sich einen Zwischenraum begrenzen, der mit einem Kühlungsmedium, meistens mit Kühlungswasser durchflossen wird. Damit versucht man, die Auswirkungen der hohen Temperaturen auf die Bodenplatten selbst zu lindern und auch das Anbacken des zu behandelnden Materials oben auf dem Anströmboden im Raum des Fliessbettes zu verhindern. Die oberhalb der Strömungskanäle angeordneten Umlenkteile sind heutzutage verschiedenartig geformte Kappen, die — wie vorher gesagt — an dem Steg innerhalb des Kanals befestigt sind. Um die sich aufheizende Masse der Kappe zu verkleinern, macht man heute die Kappen mit einem abgeschlossenen Hohlraum. Dies hilft jedoch noch nicht, um das Anbacken an der Kappe zu verhindern und dabei ist noch die Herstellung solcher Kappen und der ganzen Düsen recht aufwendig.

Aus der US-A-2,914,388 sind einfach fabrizierbare Düsen bekannt, die nur aus einem Kanal in Form einer Bohrung durch den Boden bestehen. Sie sind mit keinem Umlenkteil oberhalb des Kanals versehen.

Aus der FR-A-2,334,411 sind Düsen bekannt, die einen schlitzförmigen Kanal aufweisen. Ein dem jeweiligen Kanal zugeordneten Umlenkteil wird mittels eines über die Länge des Kanalschlitzes reichenden Leistenstücks gebildet und ist mit einem Abstand zu dem Kanalaustritt und zu dem Boden angeordnet. Das Teil ist flexibel und an einem Ende des Schlitzes befestigt und kann bei pulsierendem Fluidisierungsstrom sich zungenartig abbiegen, was den Transport des Gutes dem Boden entlang bewirken soll.

Beide dieser bekannten Anströmböden eignen sich nicht zum Einsatz in einem Fliessbettapparat unter oben erwähnten Prozess-Bedingungen.

Auch das Kühlen des Doppelbodens mittels des Kühlwassers in dem Zwischenraum des Doppelbodens ist heutzutage nicht befriedigend gelöst. Der Strom des Kühlwassers wird durch den Zwischenraum durch verschiedene Leitwände gelenkt und in den Umlenkräumen dieser Leitwege bilden sich Ablagerungen, die den Durchfluß verhindern. Diese Ablagerungen ließen sich bis heute nicht vermeiden, denn das Kühlwasser trägt verschiedene Verschmutzungsteilchen mit sich. Durch die Ablagerungen an den Umleitungen wird die Kühlung selbstverständlich sehr beeinträchtigt, so daß die Bodenfläche unterschiedlich gekühlt wird, was zu beträchtlichen Spannungen in dem Material führt, so daß es zu einer solchen Beschädigung des Bodens kommen kann, daß der ganze Boden ersetzt werden muß, was selbstverständlich mit einem großen Aufwand verbunden ist. Auch solche Reparaturen bedeuten beträchtliche Produktionsausfälle.

Es ist die Aufgabe der vorliegenden Erfindung, einen Anströmboden der anfangs beschriebenen Art zu schaffen, bei dem die bisherigen vorkommenden Nachteile möglichst vermieden würden. Dabei soll nicht nur die Konstruktion der einzelnen Elemente des Bodens, d. h. die Bodenfläche selber, sondern auch die Konstruktion der Düsen vereinfacht werden. Es sollen weiterhin Maßnahmen getroffen werden zum besseren Führen und Verteilen des aus den Düsen herausströmenden Fluidisierungsmediums in das Fliessbett hinein. Insbesondere sind Maßnahmen zu treffen, die zu einem verbesserten Kühlen sowohl im Bereich der Düsen und der Düsen selber, aber auch des Bodens an sich führten. Dadurch soll die Standzeit des Apparates verlängert und die Produktionsausfälle vermindert werden.

Diese Aufgabe wird erfindungsgemäß dadurch gelöst, daß das das Umlenkteil jeweils bildende Leistenstuck über eine Anzahl von in einer Reihe im Boden vorgesehenen Kanälen reicht, wobei der Abstand zwischen diesem Umlenkteil und dem Boden mittels Zwischenstücken (6) gegeben ist, die zwischen dem Boden und dem leistenförmigen Umlenkteil angeordnet sind, jeweils an einer Stelle, die zwischen zwei benachbarten Kanalaustritten liegt.

Diese Maßnahmen vereinfachen und verbilligen die Konstruktion des Anströmbodens eindeutig. Das leistenförmige Umlenkteil kann einfacherweise an dem Boden befestigt werden, und es ist nicht mehr notwendig, aufwendige Verschraubungslösungen zu suchen. Dadurch ist auch diese Konstruktion leicht demontierbar und reparierbar.

Dadurch, daß der Abstand mittels Zwischenstücken gegeben ist, die zwischen dem Boden und dem leistenförmigen Umlenkteil angeordnet sind, an einer Stelle, die zwischen zwei benachbarten Kanälen liegt, ist es möglich, diesen Abstand nach Belieben zu gestalten, wobei die Zwischenstücke noch dazu so ausgebildet werden können, dass ihre Form die Ausströmung des Fluidisierungsmediums in das Fliessbett hinein beeinflusst.

Die neue Form des Gestaltens der Düsen durch das leistenförmige Umlenkteil ermöglicht auch eine eindeutige Verbesserung der Kühlung der Umlenkteile, dadurch dass das leistenförmige Umlenkteil einen in der Längsrichtung verlaufenden Hohlraum einschliesst, der zum Führen eines Kühlungsmediums vorgesehen ist und auf eine Zuführungs- bzw. eine Abführungsleitung für das Kühlungsmedium angeschlossen ist.

Eine weitere wesentliche Massnahme zum Verbessern der Kühlung besteht darin, dass zum Leiten des Kühlungsmediums durch den Zwischenraum Leitungswege begrenzende Leitwände angeordnet sind, wobei die Umlenkräume zwischen den einzelnen Leitungswegen ausserhalb des über einem Verteilkasten liegenden Bodenbereichs vorgesehen sind. Auf diese Weise geschieht das Umlenken in einem sowieso kühlen Bereich des Bodenmaterials, so dass mögliche Ablagerungen in den Umlenkräumen keine wesentliche störende Rolle spielen können.

Weitere Vorteile sowie verschiedene Ausführungsformen der Erfindung werden nachstehend in Bezug auf eine Zeichnung näher beschrieben und erklärt. In der Zeichnung zeigen :

Figur 1 einen Anströmboden schematisch in Aufsicht,

Figur 2 einen Schnitt gemäss Linie A-A in Figur 1,

Figur 3 ein Detail des Anströmbodens in Seitensicht nach einer ersten Ausführungsform,

Figur 4 ein anderes Ausführungsbeispiel des Anströmbodens im Detail,

Figur 5 einen Schnitt gemäss Linie B-B in Figur 4,

Figur 6 ein Stück des Anströmbodens in Aufsicht,

Figur 7 bis Figur 9 verschiedene Ausführungsformen der Zwischenstücke in Aufsicht.

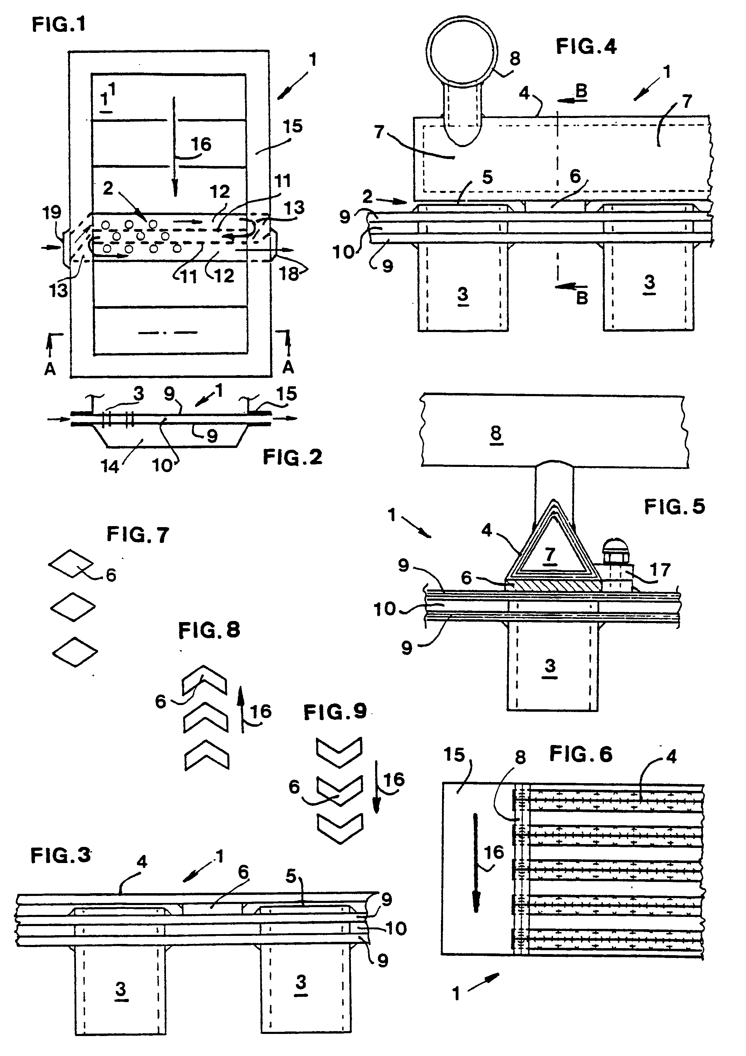

Ein Anströmboden 1 ist üblicherweise aus einigen Einzelsegmenten zusammengesetzt. Wie es in Figur 1 gezeigt ist, wo ein solches Segment mit 1¹ beispielsweise bezeichnet ist. Die den Boden bildenden Blechplatten 9 sind in der Konstruktion des Apparates zwischen Flanschen 15 eingespannt. In diesem beschriebenen Fall wird der Boden mittels zwei Wänden 9 gebildet, die zwischen sich einen Zwischenraum 10 begrenzen. Unterhalb des Bodens, wie es in Figur 2 zu sehen ist, ist ein Verteilkasten 14 für das Fluidisierungsmedium angeordnet. Das Fluidisierungsmedium wird aus dem Verteilkasten durch den Boden mittels Kanäle 3 in den Raum des oberhalb des Anströmbodens sich befindenden Fliessbettes des Apparats hineingeführt. Oberhalb des Kanalaustritts 5 befindet sich ein Umlenkteil 4 zur Umlenkung des Stromes des Fluidisierungsmediums beim Austritt aus dem Kanal in den Raum des Fliessbettes hinein. Das Umlenkteil 4 ist mit einem Leistenstück gebildet, wie es besonders in Figur 3 in der einfachsten Ausführungsform gezeigt ist. Dieses Umlenkteil 4 ist über einer Anzahl von in einer Reihe im Boden 1 vorgesehenen Kanälen 3 mit einem Abstand zu dem Kanalaustritt 5 und zu dem Boden 1 angeordnet. Der Abstand zwischen dem leistenförmigen Umlenkteil 4 und dem Boden 1 ist mittels Zwischenstücke 6 gegeben, die zwischen dem Boden 1 und dem leistenförmigen Umlenkteil 4 angeordnet sind und zwar jeweils an einer Stelle, die zwischen zwei benachbarten Kanälen 3 liegt. Der Kanal 3 ist mittels eines glatten Rohrstücks gebildet, so dass dem strömenden Fluidisierungsmedium keinerlei Behinderungen, wie es früher der Fall war, im Wege stehen. Diese Form des Kanals kann sich praktisch also nicht verstopfen, und wenn, dann ist es leicht wegzubringen. Damit ist ein erster Störungsfaktor der früheren Düsenkonstruktionen beseitigt.

Die Zwischenstücke 6 können verschiedene Formen haben, wie sie beispielsweise in den Figuren 7, 8 und 9 gezeigt sind. Diese Ausbildung dient zum Lenken des Mediumstromes, gezielt in eine gewünschte Richtung in das Fliessbett hinein. Damit kann man den Strom lenken, so dass sich eine gewünschte Transportrichtung des zu behandelnden Materials durch das Fliessbett erzielen lässt. Damit lässt sich der Durchfluss des Materials durch den Apparat beeinflussen. Im Falle der Figur 7 ist die Wirkung des Mediumausströmens auf den Transport des Materials neutral. Im Falle, der mit Figur 8 gezeigt ist, wirkt die Ausströmung des Fluidisierungsmediums auf den Transport in einer Richtung, die mit dem Pfeil 16 gezeigt ist. Eine umgekehrte Richtung zu dem Fall, der in Figur 8 gezeigt ist, wird durch die Ausführung und Anordnung der Zwischenstücke 6 gemäss Figur 9 erzielt. D. h. wenn z. B. die Richtung gemäss Figur 8 vorwärts heisst, heisst es in dem Fall gemäss Figur 9 rückwärts.

Falls man das Umlenkteil 4 zum Verhindern von möglichen Ablagerungen oder Anbackungen des zu behandelnden Materials zum Kühlen braucht, schliesst das leistenförmige Umlenkteil 4 einen in Längsrichtung verlaufenden Hohlraum 7 ein. Dieser Hohlraum 7 ist zur Aufnahme und zum Führen eines Kühlungsmediums vorgesehen. Er ist zu einer Zuführungs- bzw. einer Abführungsleitung 8 für das Kühlungsmedium angeschlossen, welche quer zu den einzelnen den Hohlraum 7 aufweisenden Umlenkteilen 4 verlaufen und die einzelnen Umlenkteile mit dem Kühlungsmedium speisen bzw. aus den einzelnen Umlenkteilen 4 das Kühlungsmedium abführen. Es sind dabei bekannte konstruktive Massnahmen getroffen, um ein einwandfreies, gleichgewichtiges Verteilen des Kühlungsmediums in die einzelnen Hohlräume 7 sicherzustellen.

Die Umlenkteile 4 können sowohl in der Richtung parallel zu der Transportrichtung, die in der Figur 1 mit dem Pfeil 16 angedeutet ist, angeordnet werden, d. h. in der Längsrichtung, wie auch quer zu dieser Richtung, wie dies in Figur 6 gezeigt ist. Hier verlaufen die Umlenkteile 4 quer zu der Transportrichtung 16, wobei die Leitung 8 in Längsrichtung parallel zu der Transportrichtung 16 verläuft. In dem zuerst erwähnten Ausführungsfall wäre es umgekehrt.

Die einzelnen Umlenkteile 4 sind zu dem Boden beispielsweise mittels einer Verschraubung befestigt, die in der Figur 5 im Detail gezeigt ist und mit 17 bezeichnet ist. Um einer vorkommenden, thermisch bedingten Dilatation der Umlenkteile, im 0,1 mm Bereich Genüge zu tun, sind die Passungen innerhalb dieser Verschraubung derart gewählt, dass sie die erwähnte Dilatation aufnehmen können. Die Zwischenstücke 6 können sowohl mit dem Umlenkteil 4 wie auch mit dem Boden verbunden sein. Dazu können Bolzen vorgesehen sein, oder es können auch diese Konstruktionsstücke zusammengeschweisst werden. Vorzugsweise verschweisst man sie mit den Umlenkteilen.

Die die einzelnen Hohlräume 7 verbindende Leitung 8 und selbstverständlich auch die Zuführungsleitung besteht aus einzelnen Abschnitten, die auf irgendeine Weise zusammengeschraubt werden. Diese Verbindung kann nach Zusammenstellen der einzelnen Elemente während einer Montage danach zusammengeschweisst werden.

Um das Kühlen des Bodens mittels des durch den Zwischenraum 10 des Doppelbodens, welcher zwischen den Begrenzungswänden 9 freigelassen ist, zu verbessern, werden in den Zwischenraum 10 Leitwände 11 angeordnet, die Leitungswege 12 für den Strom des Kühlungsmediums begrenzen. Vorzugsweise werden die Leitwände quer zu der Transportrichtung 16 angeordnet, so dass auch die Leitungswege 12 quer zu dieser Transportrichtung 16 verlaufen. Es ist sehr wichtig, die Umlenkungsräume 13, in denen die Umlenkung des Stromes aus dem einen in den folgenden Leitungsweg 12 erfolgt, ausserhalb des sozusagen warmen Bereichs des Bodens 1 anzuordnen. Dieser sozusagen warme Bereich befindet sich oberhalb des Verteilkastens 14, wobei der sogenannte kältere Bereich zwischen den den Boden einspannenden Flanschen 15 liegt. Wenn in diesem Umlenkungsbereich 13 Ablagerungen entstehen, stört das das Kühlen des Materials nicht, weil diese verminderte Kühlung in einem Bereich stattfindet, welcher thermisch nicht leidet und an sich nicht gekühlt werden muss. Die Leitungswege 12 sind üblicherweise immer einige in einem Segment $1^1$ des Anströmbodens angeordnet. Jeder der Abschnitte ist dann separat mit dem Kühlungsmittel versorgt, das über die Deckel 18 und 19 zu- bzw. abgeführt wird. Auch in diesem Fall werden übliche Massnahmen getroffen, um das Kühlungsmedium aus einer Verteilleitung in die einzelnen Abschnitte zu speisen. Damit ist sichergestellt, dass allenthalben eintretende Ablagerungen unter dem kalten Bereich, unter den Flanschen 15 auftreten und keine unzulässig hohen Wärmespannungen in dem Material des Bodens 1 entstehen können. Bei einer Beschädigung kann nur eventuell ein Segment gewechselt werden und nicht der ganze Boden.

Durch die verbesserte Kühlung der Teile in dem Bereich des Fliessbettes, d. h. der Umlenkteile 4, wie auch unterhalb des Fliessbettes, d. h. des Doppelbodens 8, 9, 10 ist ein Einsatz dieses Ausströmbodens für temperaturempfindliche Produkte möglich, und zwar in der Art, dass mit wesentlich höheren Anström- und Mediumstemperaturen gefahren werden kann, als es früher bei einem solchen Produkt möglich war. Die Standzeit zwischen den einzelnen Reparatureingriffen ist jetzt wesentlich länger möglich, d. h. die Produktionsausfälle werden vermindert.

Der Abstand zwischen dem Umlenkteil 4 und dem Boden 1 bzw. dem Austritt 5 kann nach Wunsch und Bedarf gewählt werden. Wobei bei den gezeichneten Beispielen der Abstand relativ klein ist, da ein Strom dem Boden entlang in Anbetracht des zu behandelnden Materials, z. B. Kalziumchlorid, gewünscht ist, kann im anderen Fall, z. B. eines abrasiven Materials ein grosser Abstand gewünscht sein. Dann ragt der Kanal 3 weit zum Boden hinauf und es kann sich auf dem Boden eine Materialschicht aufsetzen, die dann den Boden vor dem aufgewirbelten abrasiven Material schützt.

Das neue, gegebenenfalls gekühlte Umlenkteil 4 kann bei bestehenden Anströmböden die bisher applizierten Umlenkkappen ersetzen, ohne dass man den Boden mit den erfindungsgemässen glatten Kanälen 3 umrüsten müsste, wenn man auf die erwähnten Vorteile dieser Konstruktion verzichten kann oder will, und hauptsächlich die Vorteile der neuen leistenförmigen Umlenkteile ausnutzen muss oder will.

Zu den Vorteilen der neuen leistenförmigen Umlenkteile 4 gehört, dass im Falle des in dem Umlenkteil 4 eingeschlossenen Hohlraums 7, dieser ein Profil eines vertikal nach oben weisenden spitzen Dreiecks aufweist, was die zu befürchtenden Materialablagerungen bzw. Anbackungen weitgehend zu verhindern hilft. Diese Konstruktion ist besonders deutlich in Figur 5 gezeigt.

**Patentansprüche**

1. Anströmboden (1) mit Düsen (2) für einen Fliessbettapparat, welche Düsen (2) jeweils mit einem durch den Boden (1) führenden Kanal (3) zum Führen des Stromes eines Fluidisierungsmediums hindurch und mit einem oberhalb des Kanals (3) angeordneten Umlenkteil (4) zur Umlenkung des Stromes des Mediums beim Austritt (5) aus dem Kanal (3) gebildet sind, wobei das Umlenkteil (4) mittels eines Leistenstücks gebildet wird, dadurch gekennzeichnet, daß das das Umlenkteil (4) jeweils bildende Leistenstück über eine Anzahl von in einer Reihe im Boden (1) vorgesehenen Kanälen (3) reicht, wobei der Abstand zwischen diesem Umlenkteil (4) und dem Boden (1) mittels Zwischenstücken (6) gegeben ist, die zwischen dem Boden (1) und dem leistenförmigen Umlenkteil (4) angeordnet sind, jeweils an einer Stelle, die zwischen zwei benachbarten Kanalaustritten (5) liegt.

2. Anströmboden nach Anspruch 1, dadurch gekennzeichnet, daß das leistenförmige Umlenkteil (4) einen in Längsrichtung verlaufenden Hohlraum (7) einschließt, der zum Führen eines Kühlungsmediums vorgesehen ist und an eine Zuführungs- bzw. Abführungsleitung (8) für das Kühlungsmedium angeschlossen ist.

3. Anströmboden nach Anspruch 1, dadurch gekennzeichnet, daß die Zwischenstücke (6) zum Lenken des Mediumstromes gezielt in eine gewünschte Ausströmrichtung in das Fliessbett hinein ausgebildet sind (Fig. 7, 8, 9).

4. Anströmboden nach Anspruch 1, dadurch gekennzeichnet, daß der Kanal (3) durch den Boden (1) mittels eines Rohrstücks mit glattem Durchflußraum gebildet ist.

5. Anströmboden nach Anspruch 1 mit einem zwischen zwei Bodenplatten (9) zur Aufnahme eines Kühlungsmediums vorgesehenen Zwischenraum (10), durch welchen die Kanäle (3) führen, dadurch gekennzeichnet, daß zum Leiten des Kühlungsmediums durch den Zwischenraum (10) Leitungswege (12) begrenzende Leitwände (11) angeordnet sind, wobei die Umlenkräume (13) zwischen den einzelnen Leitungswegen (12) außerhalb des über einem Verteilkasten (14) liegenden Bodenbereich vorgesehen sind.

6. Anströmboden nach Anspruch 2, dadurch gekennzeichnet, daß der eingeschlossene Hohlraum (7) ein Profil eines vertikal nach oben weisenden spitzen Dreiecks (7, in Fig. 5) aufweist.

**Claims**

1. A base (1) with nozzles (2) for a fluidized bed device, which nozzles (2) are in each case formed by a duct (3) leading through the base (1) for conveying fluidizing medium, and by a deflector (4) arranged above the duct (3) for deflecting the flow of medium at the outlet (5) of the duct (3), the deflector (4) comprising a strip member, characterised in that each strip member extends over a number of ducts (3) provided in a row in the base (1), the spacing between each deflector (4) and the base (1) being determined by spacers (6), which are arranged between the base (1) and the deflectors (4), in each case at a point between two adjacent duct outlets (5).

2. A base according to claim 1, characterised in that each deflector (4) incorporates a cavity (7) which extends in the longitudinal direction for carrying a coolant, and is connected to a feed and removal conduit (8) for the coolant.

3. A base according to claim 1, characterised in that the spacers (6) are formed for guiding the flow of medium in a specific manner and in a desired outflow direction into the fluidized bed (Figures 7, 8, 9).

4. A base according to claim 1, characterised in that each duct (3) is formed by a pipe length with a smooth flow space.

5. A base according to Claim 1 comprising two plates (9) with an interspace therebetween for receiving a coolant and through which the ducts (3) lead, characterised in that guide walls (11), which define guide paths (12), are arranged for guiding the coolant through the interspace (10), deflector spaces (13) between the individual guide paths (12) being provided outside of the bottom area, which lies above a distribution box.

6. A base according to Claim 2, characterised in that the profile of the incorporated cavity (7) is in the form of an acute triangle which points upwards (7 in Figure 5).

**Revendications**

1. Plaque distributrice (1) pourvue de buses (2) pour un dispositif à lit fluidisé, chacune de ces buses (2) étant constituée d'un canal (3) traversant la plaque distributrice (1) pour conduire un courant d'un agent de fluidisation, et d'un déflecteur (4) disposé au dessus du canal (3) pour dévier ce courant d'agent de fluidisation à sa sortie (5) du canal (3), le déflecteur (4) étant constitué d'un tronçon de latte, caractérisée en ce que le tronçon de latte constituant chaque fois un déflecteur s'étend au dessus d'un certain nombre de canaux (3) prévus en une rangée dans la plaque distributrice (1), l'écartement entre ce déflecteur (4) et la plaque distributrice (1) étant donné au moyen de pièces intermédiaires (6) disposées entre la plaque distributrice (1) et le déflecteur (4) en forme de latte, chaque fois en un emplacement situé entre deux sorties (5) des canaux voisins l'un de l'autre.

2. Plaque distributrice selon la revendication 1, caractérisée en ce que le déflecteur (4) en forme de latte renferme une cavité (7) qui s'étend dans le sens longitudinal, qui est prévue pour conduire un agent de refroidissement et qui est raccordée à une conduite d'admission et d'évacuation (8) pour l'agent de refroidissement.

3. Plaque distributrice selon la revendication 1, caractérisée en ce que les pièces intermédiaires (6) sont conformées de manière à diriger le courant de l'agent de fluidisation dans un sens d'écoulement voulu au sein du lit fluidisé (Figures 7, 8, 9).

4. Plaque distributrice selon la revendication 1, caractérisée en ce que le canal (3) à travers la plaque distributrice (1) est constitué d'un tronçon de tube avec une section d'écoulement lisse.

5. Plaque distributrice selon la revendication 1, avec un espace intermédiaire (10) prévu entre deux plaques (9) formant le double fond pour recevoir un agent de refroidissement, les canaux (3) traversant cet espace intermédiaire (10), caractérisée en ce que, pour guider l'agent de refroidissement dans l'espace intermédiaire (10), des cloisons de guidage (11) délimitant des trajets de guidage (12) sont disposées dans cet espace intermédiaire (10), tandis que les espaces (13) où a lieu le renversement du sens de circulation de l'agent de refroidissement entre les trajets de guidage (12) successifs sont prévus à l'extérieur de la région de la plaque distributrice située au dessus d'un caisson répartiteur (14).

6. Plaque distributrice selon la revendication 2, caractérisée en ce que la cavité enclose (7) présente un profil en triangle avec un sommet dirigé verticalement vers le haut (7, dans la Figure 5).

FIG.1

FIG.4

FIG.2

FIG.7

FIG.8

FIG.9

FIG.5

FIG.6

FIG.3